# EUROPÄISCHE PATENTANMELDUNG

(11) **EP 0 864 773 A1**
(43) Veröffentlichungstag der Anmeldung: **16.09.1998**
(21) Anmeldenummer: 97122657.6
(22) Anmeldetag: 22.12.1997
(51) Int. Cl.: F16F 1/371, B60G 21/055, F16F 1/38

(54) **Gummilager, insbesondere für die Lagerung eines Stabilisatorstabes an einem Kraftfahrzeug**

(30) Priorität: 11.03.1997 DE 19709669
(71) Anmelder: Mannesmann Boge GmbH, 53175 Bonn-Bad Godesberg (DE)
(72) Erfinder: Krause, Wolfram, 53913 Swisttal (DE)

(57) **Zusammenfassung**

Gummilager, insbesondere für die Lagerung eines Stabilisatorstabes an einem Kraftfahrzeug, bestehend aus zwei Gummi-Halbschalen (1,2), wobei die Längsseite einer Halbschale (1) über eine dünne Gummischicht (3) mit der Längsseite der anderen Halbschale (2) verbunden ist, wobei die Gummischicht (3) am radial äußeren Bereich der Halbschalen (1,2) angeordnet ist.

## Beschreibung

Die Erfindung bezieht sich auf ein Gummilager, insbesondere für die Lagerung eines Stabilisatorstabes an einem Kraftfahrzeug, bestehend aus zwei Gummi-Halbschalen, wobei die Längsseite einer Halbschale über eine dünne Gummischicht mit der Längsseite der anderen Halbschale verbunden ist.

Es sind bereits derartige Gummimetall-Buchsen bekannt (z.B. DE-PS 39 03 350), bei denen zwei äußere, zusammenspannbare Lagerhalbschalen ein Aufnahmeauge bilden. Diese Lagerhalbschalen nehmen zwei Gummimetall-Halbschalen auf, dabei ist an der radial inneren Metallarmierung eine Gummischicht vorgesehen, die von der einen Metall-Halbschale zur anderen Metall-Halbschale durchgehend verläuft, so daß die beiden Gummimetall-Halbschalen einseitig zusammenhängen und an der durchgehenden dünnen Gummischicht ein Gummi-Filmscharnier bilden. Durch dieses Gummi-Filmscharnier sind die beiden Gummimetall-Halbschalen aufklappbar, so daß eine erleichterte Montage stattfinden kann. Nachteilig ist hierbei, daß das Aufklappen nur in einem bestimmten Winkelbereich stattfinden kann, nämlich in dem Bereich in dem die. äußeren Lagerhalbschalen aneinander stoßen.

Aufgabe der Erfindung ist es, ein Gummilager zu schaffen, welches nicht nur einfach zu montieren, sondern auch einfach und kostengünstig herstellbar ist.

Zur Lösung dieser Aufgabe ist vorgesehen, daß die Gummischicht am radial äußeren Bereich der Halbschalen angeordnet ist.

In vorteilhafter Weise ist dabei vorgesehen, daß die Gummischicht derart lang bemessen ist, daß eine Drehung der einen Halbschale um in etwa 180° gegenüber der anderen Halbschale ausführbar ist. Durch die Möglichkeit der relativen Drehung der beiden Halbschalen um ca. 180° gegeneinander ist es möglich, daß eine Herstellung beider Halbschalen in einer gemeinsamen Form erfolgen kann. Jede Halbschale befindet sich in einem Nest des Werkzeuges, so daß durch einen entsprechenden Gummiüberlauf ein Scharnier entsteht, welches komplett flexibel ausgestaltet und aus Gummi besteht.

Nach einer weiteren Ausführungsform ist vorgesehen, daß die Gummischicht über annähernd der gesamten axialen Länge des Gummilagers angeordnet ist. In vorteilhafter Weise wird durch die Gummischicht ein entsprechend haltbares Scharnier geschaffen, welches lediglich für die Montage benötigt wird, nach erfolgter Montage besitzt diese Gummischicht keine besonderen Aufgaben mehr.

Nach einer weiteren Ausgestaltung ist vorgesehen, daß mindestens eine Halbschale mit mindestens einer Armierung versehen ist. In vorteilhafter Weise ist als Armierung mindestens ein Metallelement vorgesehen, wobei zur besseren Verbindung mit der Gummi-Halbschale die Armierung mit mindestens einem Durchbruch versehen ist.

Die Erleichterung der Montage und die einwandfreie Fixierung des Gummilagers wird erzielt, indem mindestens eine Halbschale zur Positionierung und Aufnahme von Axialkräften mit mindestens einem Flansch versehen ist.

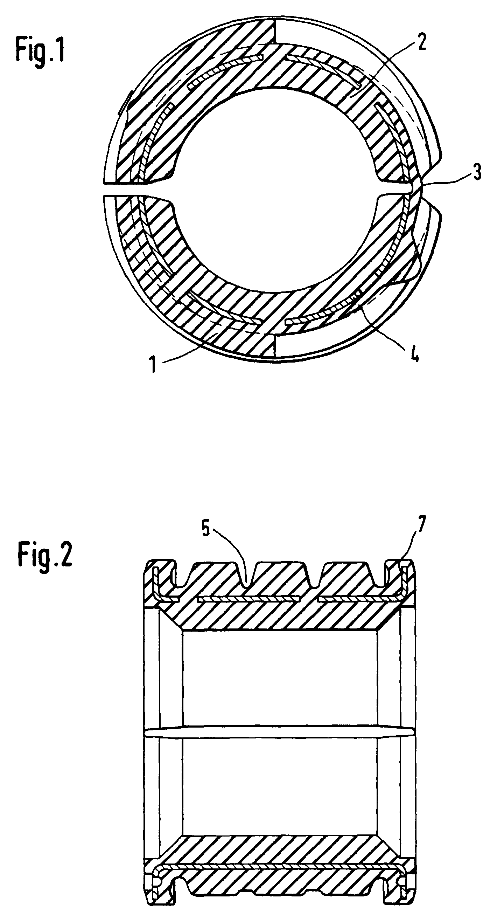

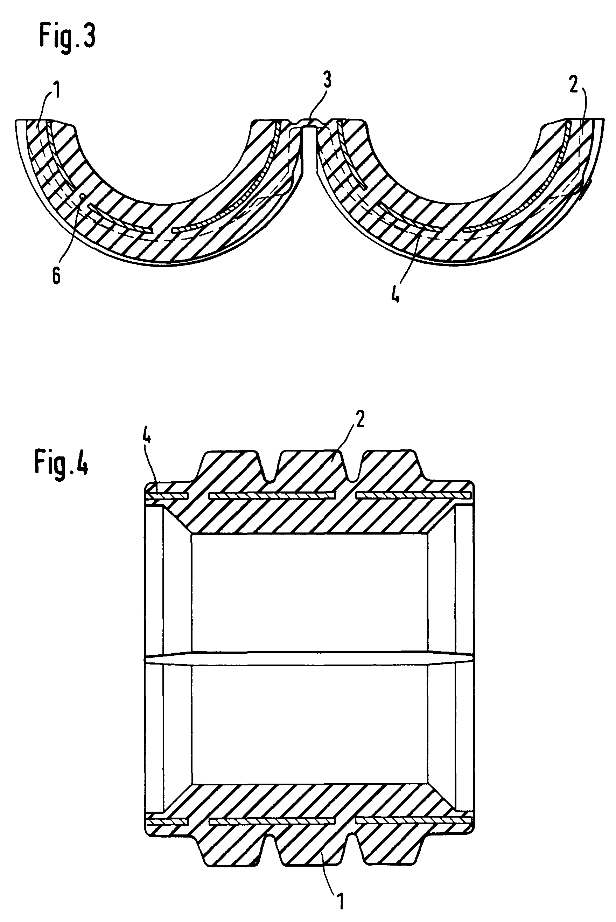

Eine bevorzugte Ausführungsform ist in den Figuren 1 bis 3 dargestellt. In der Figur 4 ist eine Ausführungsform ohne Flansch dargestellt.

Aus den Figuren 1 und 2 ist ein Gummilager zu entnehmen, welches im wesentlichen aus den beiden Gummi-Halbschalen 1 und 2 besteht. Diese beiden Gummi-Halbschalen sind über die Gummischicht 3 miteinander unverlierbar verbunden, so daß nicht nur eine einfache Montage durch Aufklappen der einen Gummi-Halbschale gegenüber der anderen Gummi-Halbschale erfolgen kann, sondern auch eine entsprechende Positionierung während der Montage der beiden Gummi-Halbschalen 1 und 2 zueinander.

Aus den Figuren 1 und 2 ist zusätzlich eine Armierung 4 zu erkennen, welche mit Durchbrüchen 6 versehen ist, dabei dienen diese Durchbrüche 6 einem Druckausgleich zwischen der inneren und äußeren Schicht der Gummi-Halbschale 1 bzw. 2 während des Vulkanisations-Prozesses.

Die Gummischicht 3 hat eine entsprechende Erstreckung, so daß die relative Drehung der beiden Gummi-Halbschalen 1 und 2 zueinander um circa 180° eine gute Herstellbarkeit gewährleistet, indem diese beiden Gummi-Halbschalen 1 und 2 in einer relativ flachen Form, waagerecht liegend, hergestellt werden können. Das Werkzeug ist so ausgebildet, daß die Gummischicht 3 sich von der einen Halbschale 1 zur anderen Halbschale 2 erstrecken kann um somit die Fixierung beider Teile zueinander herzustellen. Die Figur 3 zeigt hierzu, daß die Armierungsteile waagerecht in eine Form einlegbar sind und anschließend der Gummi einbringbar und vulkanisierbar ist.

Die Figur 2 zeigt im Schnitt Ausnehmungen 5, die einem Volumenausgleich der Gummi-Halbschalen 1 bzw. 2 dienen. Dieser Volumenausgleich ist nötig, wenn nach oder während der Montage eine Vorspannung auf das Gummilager gebracht wird, so daß ein bestimmtes verdrängtes Volumen einer Gummi-Halbschale 1 bzw. 2 in die Ausnehmung 5 verdrängt werden kann.

In der Figur 4 ist eine Ausführung dargestellt, bei der die beiden Gummi-Halbschalen 1 und 2 zwar eine zylindrische Armierung 4 aufweisen, ein Flansch 7 gemäß Figur 2 ist jedoch nicht vorgesehen.

### Bezugszeichenliste

- 1: - Gummi-Halbschale
- 2: - Gummi-Halbschale
- 3: - Gummischicht
- 4: - Armierung
- 5: - Ausnehmung
- 6: - Durchbruch
- 7: - Flansch

## Patentansprüche

1. Gummilager, insbesondere für die Lagerung eines Stabilisatorstabes an einem Kraftfahrzeug, bestehend aus zwei Gummi-Halbschalen, wobei die Längsseite einer Halbschale über eine dünne Gummischicht mit der Längsseite der anderen Halbschale verbunden ist,
dadurch gekennzeichnet,
daß die Gummischicht (3) am radial äußeren Bereich der Halbschalen (1, 2) angeordnet ist.

2. Gummilager nach Anspruch 1,
dadurch gekennzeichnet,
daß die Gummischicht (3) derart lang bemessen ist, daß eine Drehung der einen Halbschale (1) um in etwa 180° gegenüber der anderen Halbschale (2) ausführbar ist.

3. Gummilager nach Anspruch 1,
dadurch gekennzeichnet,
daß die Gummischicht (3) über annähernd der gesamten axialen Länge des Gummilagers angeordnet ist.

4. Gummilager nach Anspruch 1,
dadurch gekennzeichnet,
daß mindestens eine Halbschale (1, 2) mit mindestens einer Armierung (4) versehen ist.

5. Gummilager nach Anspruch 4,
dadurch gekennzeichnet,
daß als Armierung (4) mindestens ein Metallelement vorgesehen ist.

6. Gummilager nach Anspruch 4,
dadurch gekennzeichnet,
daß die Armierung (4) mit mindestens einem Durchbruch (6) versehen ist.

7. Gummilager nach Anspruch 1,
dadurch gekennzeichnet,
daß mindestens eine Halbschale (1, 2) zur Positionierung und Aufnahme von Axialkräften mit mindestens einem Flansch (7) versehen ist.
